# EUROPEAN PATENT SPECIFICATION

(11) **EP 1 625 344 B1**
(45) Date of publication and mention of the grant of the patent: **05.03.2008**
(21) Application number: 03733643.5
(22) Date of filing: 21.05.2003
(51) Int. Cl.: F41H 7/04

(54) **MEANS FOR PROTECTION OF A PERSON'S FEET FROM INJURIES IN AN EVENT OF A MINE BLAST**
MITTEL ZUM SCHUTZ VOR FUSSVERLETZUNGEN BEI MINENEXPLOSIONEN
MOYEN PERMETTANT DE PROTEGER LES PIEDS D'UNE PERSONNE DE TOUTE BLESSURE LORS DE L'EXPLOSION D'UNE MINE

(43) Date of publication of application: 15.02.2006
(73) Proprietor: Karotek As, 3737 Skien (NO)
(72) Inventor: HANSEN, Per Morten, N-3960 Stathelle (NO)
(74) Representative: Holmberg, Martin Tor
(86) International application number: PCT/NO2003/000164
(87) International publication number: WO 2004/104511

(56) References cited:
- EP-A2- 1 045 220
- EP-A2- 1 293 747
- DE-A1- 3 627 485
- DE-A1- 10 045 685
- DE-A1- 19 740 103
- US-A- 5 178 434
- US-A- 5 517 894
- US-A- 5 533 781

## Description

The present invention is related to means for protection of a person's feet from injuries in an event of a mine blast from underneath a vehicle in which the person is sitting, as described in EP 1293747 A2.

Lorries and larger trucks and four wheeled drive cars are used in environments where sudden explosions may occur. This is also valid for armoured personnel carriers and other mobile equipment used for clearing land-mines and unexploded ordnances (UXO). Persons sitting in such vehicles in many cases get their feet, shanks and calfs seriously injured in connection with such explosions. An explosion from the earth to the underside of the vehicle having a magnitude typically for landmines will press the flooring in the vehicle suddenly upwardly under a very high force and within a very short time. This means that people in such vehicles may suffer from serious fractures of their feet, shanks and calfs in a way which may not be repairable.

The means according to the present invention has proven excellent dampening functions secured to the flooring in the vehicle at places where people rest their feet. The means according to the invention has a very small height which makes the means suitable for the purpose, in other words arrangement of the means according to the invention on the flooring does not hamper or influence the operation of the vehicle as such.

The above is achieved with the means according to the present invention as defined by the features stated in the claims.

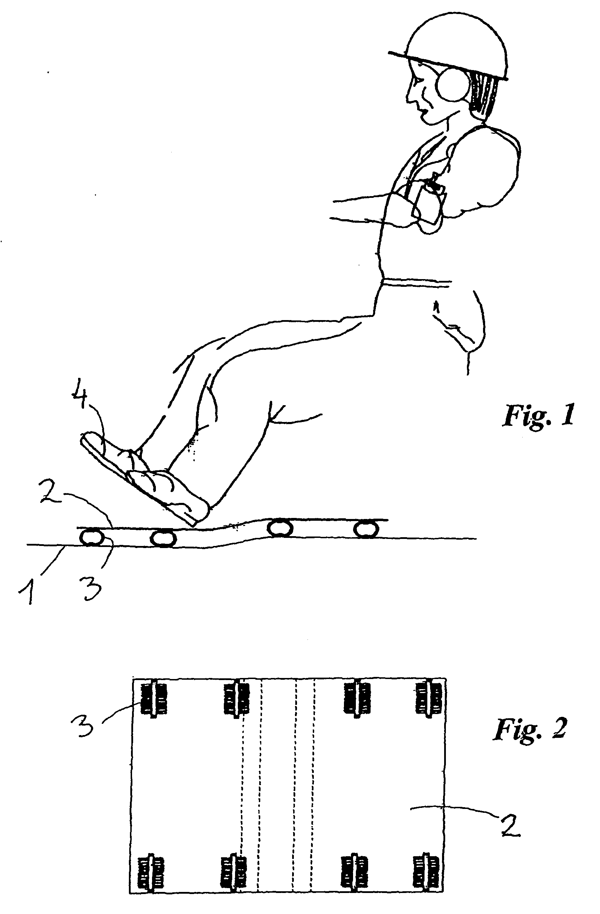

The drawing discloses in figure 1 schematically a person sitting in a vehicle with the means for dampening impacts according to the invention, in a schematic cross section and figure 2 discloses schematically a flooring plate adapted for resting of a person's feet.

According to the invention, a flooring plate 2 with a-certain thickness and weight, ensuring a movement of inertia, which together with springs in the shape of wire insulators 3 between and fixed to the plate 2 and the flooring in the vehicle. Users test their feet 4 on the plate 2. The wire insulator 3 comprises a wound wire in the shape of a helical cylinder being secured to the flooring 1 of the vehicle as well as to the plate 2.

The number of wire insulators 3 and the thickness of the plate 2, respectively the weight of the plate 2 is specifically adapted for the different types of vehicles and types of impacts which may be expected.

The means for dampening impacts according to the present invention has proven to dampen the impact of the flooring 1 on the feet 4 of persons in a vehicle, to such a degree that serious injuries are avoided.

## Claims

1. Means for protection of a person's feet from injuries in an event of a mine blast from underneath a vehicle in which the person is sitting, **characterized in that** a plurality of dampening means being secured to the floor (1) and to a heavy flooring plate (2) having substantially the shape of the floor, said flooring plate (2) thereby being arranged above the floor (1) at a height corresponding to the height of the dampening means, the flooring plate (2) thereby having a thickness and thereby a movement of inertia which together with the weight of the user's feet is enough to compress the dampening means such that the shock pressure is dampened.

2. Means according to claim 1, **characterized in that** the dampening means being wire insulators (3) comprising helically wound wires.

## Patentansprüche

1. Vorrichtung zum Schutz der Füße einer Person gegen Verletzungen im Falle einer Minenexplosion von unterhalb eines Fahrzeugs, in dem die Person sitzt, **dadurch gekennzeichnet, dass** eine Mehrzahl von Dämpfungseinrichtungen am Boden (1) und an einer schweren Bodenplatte (2), die im Wesentlichen die Form des Bodens hat, befestigt sind, wobei die Bodenplatte (2) **dadurch** oberhalb des Bodens (1) auf einer Höhe entsprechend der Höhe der Dämpfungseinrichtungen angeordnet ist, wobei die Bodenplatte (2) **dadurch** eine Dicke und **dadurch** eine Bewegungsträgheit hat, die zusammen mit dem Gewicht der Füße des Benutzers ausreicht, um die Dämpfungseinrichtungen so zusammenzudrücken, dass der Druckstoß gedämpft wird.

2. Vorrichtung nach Anspruch 1, **dadurch gekennzeichnet, dass** die Dämpfungseinrichtungen Kabelisolierungen (3) sind, die spiralförmig gewickelte Kabel umfassen.

## Revendications

1. Moyens permettant de protéger les pieds d'une personne de toute blessure lors de l'explosion d'une mine placée au-dessous d'un véhicule dans lequel la personne s'assied, **caractérisés en ce qu'**une pluralité de moyens d'amortissement sont fixés au plancher (1) et à une plaque de sol lourde (2) présentant essentiellement la configuration du plancher, ladite plaque de sol (2) étant disposée de ce fait au-dessus du plancher (1) à une hauteur correspondant à la hauteur des moyens d'amortissement, la plaque de sol (2) ayant de ce fait une épaisseur et ainsi un mouvement d'inertie qui avec le poids des pieds de l'utilisateur est suffisant pour comprimer les moyens d'amortissement de telle sorte que la pression des chocs est amortie.

2. Moyens selon la revendication 1, **caractérisés en ce que** les moyens d'amortissement sont des isolateurs à fils métalliques (3) comportant des fils métalliques enroulés de façon hélicoïdale.
